# EUROPÄISCHE PATENTANMELDUNG

(11) **EP 1 336 387 A1**
(43) Veröffentlichungstag der Anmeldung: **20.08.2003**
(21) Anmeldenummer: 03001482.3
(22) Anmeldetag: 23.01.2003
(51) Int. Cl.: A61C 5/06, B65D 77/24, B65D 75/58, A61C 19/00, B65D 5/52, B65D 75/52

(54) **Single-Dose Knickverpackung**

(30) Priorität: 18.02.2002 DE 10206874
(71) Anmelder: Heraeus Kulzer GmbH & Co.KG, 63450 Hanau (DE)
(72) Erfinder: Bressler, Christian, 60385 Frankfurt (DE); Balkenhol, Markus, Dr., 35440 Linden. (DE)
(74) Vertreter: Kühn, Hans-Christian

(57) **Zusammenfassung**

Es wird eine Single-Dose-Verpackung (1) beschrieben, die folgende Merkmale aufweist:
- die Form einer Karte mit mindestens einer geraden Seite,
- eine gerade Sollknick-Linie (4) parallel zu einer Seite der Karte,
- ein Fenster (6) im Bereich der Sollknick-Linie enthaltend einen Materialbehälter (3),
- eine Arretierungsmöglichkeit für den geknickten Zustand,
- eine Öffnungsmöglichkeit für den Materialbehälter (3),
dadurch gekennzeichnet, dass durch das Knicken ein geöffnetes Standgefäß zur Entnahme der Flüssigkeit mit Pinsel oder Bürste (2) entsteht, wobei der Materialbehälter (3) im geknickten, aufgestellten Zustand der Karte frei zugänglich oben horizontal angeordnet ist.

## Beschreibung

Die Erfindung betrifft eine Verpackung für einzelne Dosen eines flüssigen, halbfesten oder pastösen Materials in Kartenform, die durch Knicken in ein standfähiges Darreichungsgefäß umgewandelt wird.

Flüssige Dentalmaterialien werden oft mit Pinseln oder Bürsten (z.B. dem sog. "Microbrush®") auf die zu behandelnden Zähne aufgebracht. Dabei kommt es darauf an, dass die Handhabung einfach ist und dass die Flüssigkeit möglichst mit einer Hand entnommen und aufgebracht werden kann. Dies stellt weniger ein Problem dar, wenn das Material aus Flaschen zu entnehmen ist. Häufig werden Dentalmaterialien aber in sogenannten "Single Dose" Verpackungen angeboten, bei denen jeweils eine Portion frisch geöffnet wird, wobei die weiteren Portionen gegen Verderben oder Kontaminierung geschützt sind. Solche kleinen Verpackungen müssen entweder in geeignete Ständer abgestellt werden oder mit zwei Händen manipuliert werden. Angesichts dieser Problematik wurde ein neuer Ansatz gewählt und eine andersartige Single-Dose-Verpackung gefunden, die folgende Merkmale aufweist:
- die Form einer Karte mit mindestens einer geraden Seite,
- eine gerade Sollknick-Linie parallel zu einer Seite der Karte,
- ein Fenster im Bereich der Sollknick-Linie enthaltend einen Materialbehälter,
- eine Arretierungsmöglichkeit für den geknickten Zustand,
- eine Öffnungsmöglichkeit für den Materialbehälter;
- und als Besonderheit das Merkmal, dass durch das Knicken ein geöffnetes Standgefäß zur Entnahme des Materials mit einem Entnahmeinstrument entsteht, wobei der Materialbehälter im geknickten Zustand der Karte frei zugänglich oben horizontal angeordnet ist.

Die Verpackung eignet sich selbstverständlich für jegliche Flüssigkeiten, Pasten oder halbfeste Materialien, bei denen die Verpackung in einzelnen Dosen sinnvoll ist. Dies sind besonders Flüssigkeiten, die in wiederverschließbaren Behältern leicht vertrocknen oder Verkrustungen am Verschluss verursachen. Bei Nagellack, Korrekturflüssigkeit, Wimperntusche und Kunstmalerfarben stellt das z. B. ein Problem dar. Das Abfüllen von Sekundenkleber oder 2-Komponentenklebstoff in die erfindungsgemäße Verpackung ist ebenfalls denkbar. Die Verpackung eignet sich auch für Pastenmaterial, das in kleinen Dosen angewandt wird und etwa mit einem Spatel zu entnehmen wäre.

Die Karte ist vorzugsweise rechteckig oder quadratisch, kann aber auch andere Formen mit mindestens einer geraden Seite aufweisen, wie z.B. die eines Trapezes oder eines Dreiecks, insoweit die Symmetrie eine Standfestigkeit in geknicktem Zustand zulässt.

Die Karte ist vorzugsweise aus einem Kunststoff. Die Karte ist parallel zu ihrer geraden Kante entlang einer geraden Sollknicklinie knickbar. Dies kann beispielsweise durch eine einseitig angebrachte Kerbe bewerkstelligt werden. Ferner ist vorgesehen, dass die Karte im geknickten Zustand arretierbar ist und - im Fall einer rechteckigen oder quadratischen Karte - nach Art eines Dachs aufgestellt werden kann. Als Arretierungsmöglichkeit kann eine Rast- oder Schnappvorrichtung vorgesehen werden, beispielsweise eine Kunststoffzunge, die in einer Öffnung der Karte einrastet. Im Bereich der Sollknicklinie weist die Karte ein Fenster auf, in dem ein Materialbehälter angebracht ist. Nach dem Knicken und Aufstellen ist dieser Materialbehälter in geeigneter Weise - etwa durch Abziehen einer Abdeckfolie - zu öffnen. Der Anwender kann dann die das Material bzw. die Flüssigkeit mit einem geeigneten Entnahmeinstrument, beispielsweise einem Pinsel, Microbrush, Löffel oder Spatel entnehmen.

Es kann vorgesehen sein, dass das entsprechende Instrument an der Verpackung leicht entfernbar angebracht ist.

Die Sollknicklinie muss nicht genau in der Mitte der Karte liegen. Auch wenn sie seitlich versetzt liegt, ist eine Aufstellung möglich.

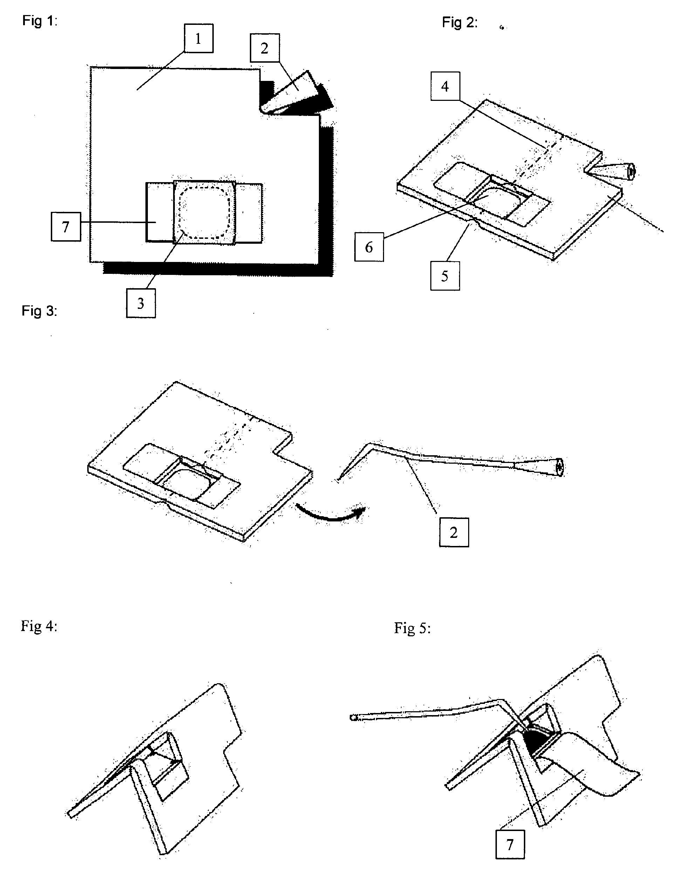

Der Materialbehälter (Tank) kann beispielsweise wie folgt ausgeführt sein:
a) Der Tank wird gebildet durch das Kunststoffteil (Karte), in dem eine ausgesparte Öffnung der Karte eine Flüssigkeit aufnehmen kann. Verschlossen wir diese Öffnung durch eine Folie oder
b) durch ein weiteres Kunststoffteil in der Art eines Deckels.
   Vorteilhaft sind bei a) und b) die Folie oder der Deckel so mit der Karte verbunden, dass sie beim Knicken geöffnet werden. Im Fall der Folie kann dies so gelöst sein, dass entlang der Sollknicklinie ein Dorn (_Λ_) oder eine Lasche (_∩_) vorgesehen sind, welche die darüber angebrachte Folie beim Knicken aufhebeln bzw. aufstoßen. Selbstverständlich kann die Folie auch, wie in der Abbildung 5 zu sehen, mit einem ausreichend langen Überstand versehen sein, der von Hand abgezogen werden kann.
c) Der Tank wird gebildet durch eine Aussparung in der Karte zur Aufnahme des Materials und auf beiden Seiten mit Folie versiegelt.
   Im Fall c) ist es wiederum zweckmäßig, wenn bei einer der beiden Siegelfolien Mittel dafür vorgesehen sind, dass sich beim Knicken der Tank öffnet (Wieunter b) beispielhaft beschrieben).
d) Der Tank wird durch zwei Folien gebildet, die am Rand gesiegelt sind (dem Fachmann als 4-Randsiegelbeutel bekannt) oder durch
e) eine Folie, die an 3 Rändern gesiegelt ist (3-Randsiegelbeutel).
   Im Fall der Siegelrandbeutel d) und e) wird die Öffnungsmöglichkeit zweckmäßig so vorgesehen, dass entlang der Versiegelung beim Knicken ein Teil der Beutel deckelartig abgezogen wird.

Vorteile der erfindungsgemäßen Verpackung sind z.B. folgende: ihre Standfähigkeit im geknickten Zustand, sie ist gleichermaßen geeignet für Rechts- und Linkshänder, einhändig bedienbar bei der Flüssigkeitsentnahme, und es ist kein separater Standfuß nötig.

Die Erfindung wird anhand der im folgenden beschriebenen Abbildungen einer Single Dose-Verpackung für Dentalmaterialien näher erläutert, ohne sie auf diese Ausführungsform zu beschränken:
- Fig 1: zeigt eine Draufsicht der rechteckigen Karte in ungeknicktem Zustand (Anlieferungszustand),
- Fig. 2: zeigt die Karte in Schrägsicht,
- Fig. 3: zeigt die Entnahme des Microbrushs,
- Fig. 4: zeigt den aufgestellten, geknickten Zustand vor dem Öffnen des Materialbehälters und
- Fig. 5: zeigt den Zustand, nachdem die Abdeckfolie des Materialbehälters aufgeklappt wurde.

Fig 1 zeigt eine Draufsicht der Karte **1** in ungeknicktem Zustand (Anlieferungszustand). An der rechten oberen Ecke ist eine Ausnehmung zu sehen, an der leicht entfernbar ein Microbrush **2** angebracht ist. Das Fenster mit dem Materialbehälter **3** ist auf diesem Bild durch eine Folie **7** verschlossen. Die Konturen des Materialbehälters **3** sind als gestrichelte Linie zu erkennen.

Fig. 2 zeigt die Karte in Schrägsicht. Unten ist die Kerbe **5** entlang der gestrichelten Sollknick-Linie **4** zu erkennen. Das Fenster **6** für den Materialbehälter **3** ist in dieser Ansicht offen dargestellt.

Fig. 3 zeigt die Entnahme des Microbrushs **2**, der in Fig. 1 und 2 verdeckt war.

Fig. 4 zeigt den geknickten Zustand vor dem Öffnen des Materialbehälters **3**. Die Arretierung, beispielsweise durch eine Rastvorrichtung ist in der Abbildung nicht zu sehen. Man sieht die horizontale Anordnung des Materialbehälters im oberen Bereich, und die freie Zugänglichkeit.

Fig. 5 zeigt den Zustand, nachdem die Abdeckfolie **7** des Materialbehälters **3** aufgeklappt wurde. Ferner ist die Entnahme des Materials (schwarze Fläche) mit dem Microbrush **2** dargestellt.

Die im Vorliegenden beschriebene Verpackung wird vorzugsweise für Dentalmaterial eingesetzt.

## Patentansprüche

1. Single-Dose Verpackung für flüssige, pastöse oder halbfeste Materialien, mit den Merkmalen
- die Form einer Karte (1) mit mindestens einer geraden Seite,
- eine gerade Sollknick-Linie (4) parallel zu einer Seite der Karte,
- ein Fenster (6) im Bereich der Sollknick-Linie enthaltend einen Materialbehälter (3),
- eine Arretierungsmöglichkeit für den geknickten Zustand,
- eine Öffnungsmöglichkeit für den Materialbehälter (3),
- **dadurch gekennzeichnet, dass** durch das Knicken ein geöffnetes Standgefäß zur Entnahme der Flüssigkeit mit Pinsel oder Bürste entsteht, wobei der Materialbehälter (3) im geknickten, aufgestellten Zustand der Karte frei zugänglich oben horizontal angeordnet ist.

2. Verpackung nach Anspruch 1, **dadurch gekennzeichnet, dass** als Öffnungsmöglichkeit eine abziehbare Verschlussfolie (7) am Materialbehälter (3) vorgesehen ist.

3. Verpackung nach Anspruch 1, **dadurch gekennzeichnet, dass** entlang der geraden Sollknicklinie (4) eine Kerbe (5) einseitig angebracht ist.

4. Verpackung nach Anspruch 1, **dadurch gekennzeichnet, dass** die Arretierungsmöglichkeit als Rast- oder Schnappvorrichtung ausgeführt ist.

5. Verpackung nach Anspruch 1, **dadurch gekennzeichnet, dass** an einer Ecke eine Ausnehmung vorgesehen ist, an der leicht entfernbar ein Entnahmeinstrument befestigt ist.

6. Verpackung nach Anspruch 1, **dadurch gekennzeichnet, dass** das Entnahmeinstrument der der Gruppe der Pinsel, Spatel, Löffel oder Microbrushs (2) angehört
